# EUROPEAN PATENT SPECIFICATION

(11) **EP 0 386 102 B1**
(45) Date of publication and mention of the grant of the patent: **15.09.1993**
(21) Application number: 88910162.2
(22) Date of filing: 04.11.1988
(51) Int. Cl.: B60F 3/00

(54) **AMPHIBIOUS CRAFT**
AMPHIBIENFAHRZEUG
ENGIN AMPHIBIE

(30) Priority: 06.11.1987 SE 8704366; 12.11.1987 SE 8704437
(43) Date of publication of application: 12.09.1990
(73) Proprietor: LINDBERG, Ebbe, S-82606 Söderala (SE)
(72) Inventor: LINDBERG, Björn, S-826 06 Söderala (SE)
(74) Representative: Bjerkén, Jarl Hakan
(86) International application number: SE8800597
(87) International publication number: WO8904261

(56) References cited:
- SE-A- 28 555
- US-A- 2 306 072
- US-A- 2 586 218
- US-A- 2 693 162
- US-A- 3 013 520
- US-A- 3 469 553

## Description

### Technical field of the invention

The present invention relates to an amphibious craft comprising two separate, endless and flexible driving belts preferably running in parallel and provided with propelling projections, said driving belts being arranged in known manner between pairs of separate rotating wheels or rollers and individually drivable by separate sources of power at variable speeds so as to facilitate not only the propulsion of the craft over a body of water, but also and simultaneously the steering thereof, without the assistance of any auxiliary means extending deep into the water.

### Prior art technique

An amphibious vehicle of the type mentioned above, mainly adapted to be driven on land, is disclosed in US Patent Specification 3,469,553. In this prior art structure, the two driving belts - which are individually drivable as well as reversible to facilitate steering of the vehicle - are however disposed on the outside of a plurality of spring-loaded, movable supporting wheels which serve to hold the belt properly stretched and of which those held in engagement with the lower part of the belt project a distance beyond an opening which is formed in the frame of the vehicle and through which the lower part of the belt extends. More precisely, the lower supporting wheels extend to a notable extent below the plane in which the opening is located, the lower part of the driving belt being positioned at a level considerably below the opening in the frame. This arrangement may be convenient when the vehicle is driven over marshy ground or in loose snow and the driving belts must take over the propelling function of two rear driving wheels which are normally used for driving the vehicle on solid ground. However, the arrangement is extremely inadequate for driving the vehicle over a body of water. Already at fairly moderate belt speeds, water will in fact flow into the space between the upper and lower parts of the driving belts, i.e. through the gaps between the lower parts of the belts and the openings in the vehicle frame, and then cause a turbulent flow which notably impedes the propulsion of the vehicle and reduces speed. Of course, the turbulent flow increases with the belt speed. Moreover, water enters between the belt and the driving rollers and may then cause extreme strain in the belt and jeopardise proper engagement of the belt with the driving roller.

### Brief description of the inventive idea

The present invention - which is based on the use of individually drivable, endless flexible belts - aims at eliminating the above-mentioned drawbacks of the structure according to US 3,469,553 and at providing an amphibious craft which is mainly adapted to be driven on water at high speed and which is steered simply by means of the actual belts, i.e. without the assistance of rudders or propellers extending into the water. According to the invention, these and other objects are achieved in that the separate driving belt is arranged in a downwardly open recess which is formed in the bottom of said craft and is sealed against ambient water, and that there is arranged, in the space between the upper and lower parts of said driving belt, a filling body which substantially completely fills up the space defined on one hand by said two rotating rollers and, on the other hand, by the upper and lower parts of the driving belt, the inside of the driving belt being kept permanently in engagement not only with the rollers but also with the upper and lower sides of the filling body, without preventing water from flowing between the driving belt and the filling body.

The arrangement of a filling body of the type mentioned above, between the lower and upper parts of the belt, ensures that no appreciable amounts of water enter on the upper side of the lower part of the driving belts, the two driving belts functioning as hydrofoils supporting the craft in a planing state in which it lies high in relation to the water surface, i.e. substantially only the driving belts and their projections are in contact with the water. In contrast to conventional fin- or wing-shaped hydrofoils, the inventive driving belts also exert a force which efficiently propels the craft and makes it possible to drive the craft at extremely high speed on the surface of the water. The two driving belts which are reversible and which can also run at mutually variable speeds, enable the craft to be steered in the desired direction even at high speeds, without the assistance of rudders or propellers extending into the body of water, as is normally required for steering a waterborne vehicle.

### Further description of prior art technique

Many different crafts are known which, according to the mode of propulsion, can be divided into two main categories, one in which propulsion is effected by means of chains or cables provided with paddles, and one in which propulsion is effected by flexible belts provided with projections. There is a fundamental difference between these categories in respect of the possibilities of reaching high speeds when driving the craft over a body of water. Thus, drive mechanisms in the form of chains provided with paddles (which really is but a simpler form of the paddle wheels used on paddle-steamers) allow propulsion at speeds which are but a fraction of the speeds that can be obtained with flexible belts made of e.g. rubber, plastic, steel, or combinations thereof. As examples of structures belong in the first category, mention may here be made of the crafts shown in US 599,050, US 2,894,476, US 3,013,520, US 3,842,785, DE 665,174 and FR 657,551, while examples of structures belonging in the second category are found in US 1,565,170 and US 3,951,093 and also in US 3,469,553 as mentioned in the introduction.

Of the last-mentioned patents, US 565,170 relates to a craft on which both belts are driven by wheels mounted on a common axle which, in turn, is adapted to be driven by a single motor. In other words, the two driving belts of this structure cannot be driven selectively or individually, and therefore the craft cannot be steered by the belts, which means that a rudder must be used. The craft according to US 1,565,170 is further not amphibious, since the driving belts are positioned at a level above a centre keel, which renders it impossible to drive the craft on a solid land or ice surface. Although the craft comprises, between the upper and lower parts of the individual driving belt, a hollow body, this is of a height which is considerably smaller than the diameter of the belt rollers, the underside of the hollow body being disposed considerably above the lower part of the belt. In other words, the body does not fill up the space between the two parts of the belt, which means that water can freely enter the space between the lower part of the belt and the underside of the hollow body.

US patent 3,951,093 discloses an amphibious craft which is mainly intended to be driven on land but which, in an emergency, can be driven also on water, the two driving belts being disposed on the outside of the vehicle frame, more precisely on subframes which are detachably mounted outside the frame. These subframes which, admittedly, comprise side plates extending between the upper and lower parts of the individual belt, comprise a plurality of supporting wheels with which the driving belt engages. This means that water can enter between the belt and the supporting wheels and cause turbulent flow interfering with the propulsion.

### Brief description of the accompanying drawings

In the drawings:
- FIG. 1: is a schematic view, partly in longitudinal section, of a craft according to the invention,
- FIG. 2: is a schematic cross-section of the same craft,
- FIG. 3: is partial plan view of an alternative embodiment of the driving belts of the craft,
- FIG. 4: is a partial perspective view of an embodiment of the craft, in which the driving belts are movably suspended,
- FIG. 5: is a partial, schematic longitudinal view of an alternative embodiment of the driving belts,
- FIG. 6: comprises three schematic views of the inventive craft in a half-planing state, picture a being a schematic cross-section, picture b a schematic, partial longitudinal section, and picture c a schematic perspective view, and
- FIG. 7: illustrates in a similar manner the same craft in a fully planing state.

### Detailed description of the invention

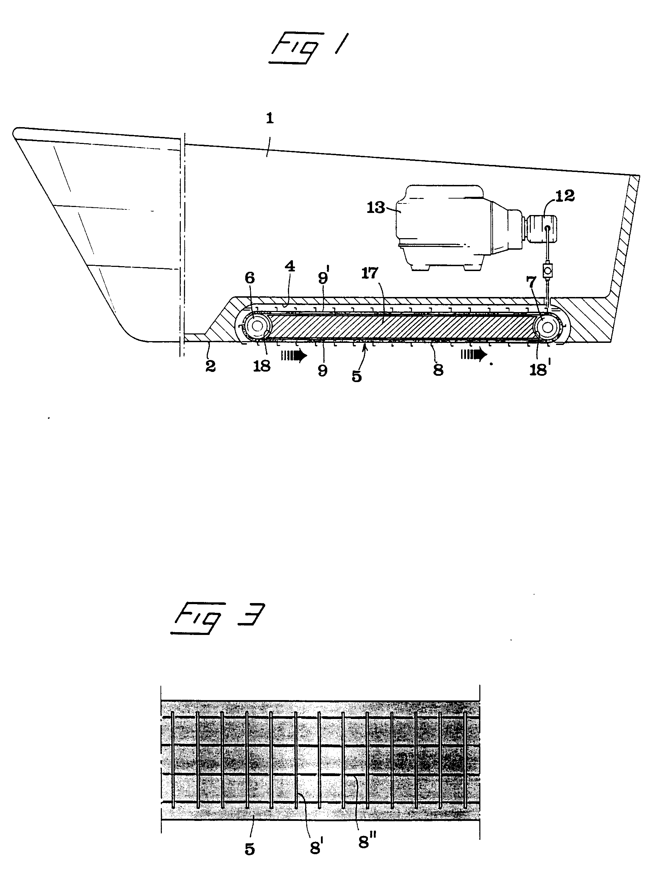

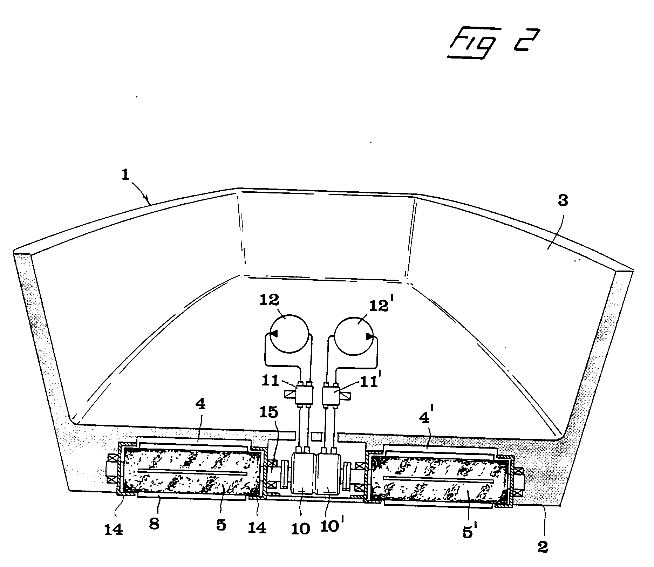

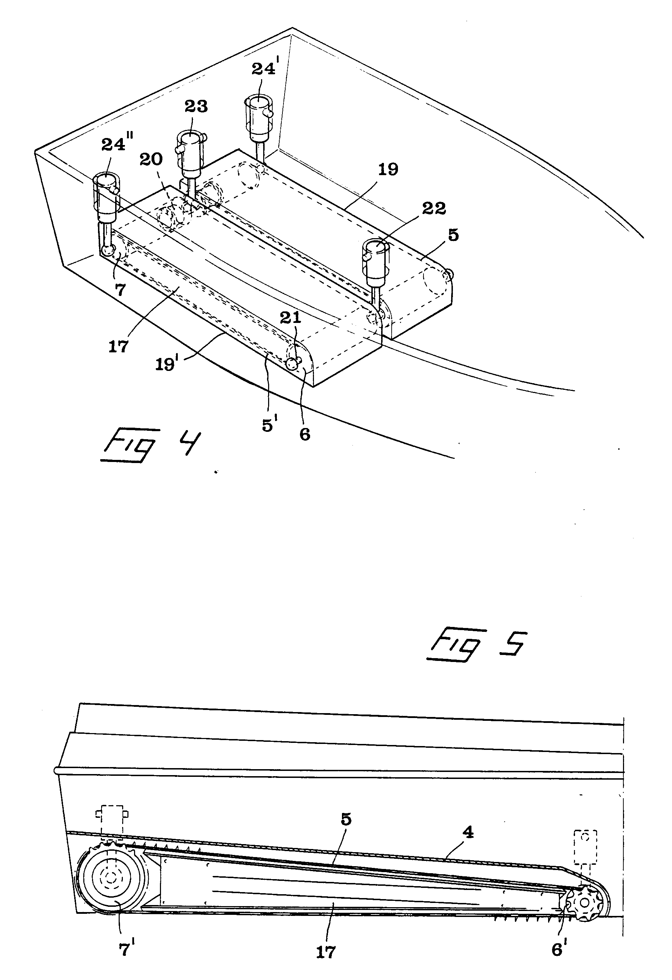

In Figs 1-3, a hull of a craft is designated 1 and comprises a bottom 2 which in this case is planar, and a shell plating 3 of suitable type. The bottom of the craft is formed with two recesses 4, 4', each of which accommodates a driving belt generally designated 5, 5'. Each driving belt consists of an endless web of a flexible material such as rubber, plastic, steel or a combination thereof. The belt is, in known manner, disposed around a pair of separate rotating wheels or rollers 6, 7 which are located in the area of the opposing short ends of the recess 4. On the outside of the flexible belt 5, there are formed a suitable number of projections 8 serving to let the belt grip or increase the grip in relation to the medium towards which the lower part 9 of the belt operates. The upper part of the belt is designated 9'. In practice, the projections 8 can, in per se known manner, have the form of beads or ribs oriented transversely of the longitudinal direction of the belt, the length of the beads conforming to or being slightly smaller than the width of the belt.

A motor 10, 10' is connected to the rear roller 7 of each driving belt 5, 5' and adapted, under normal operation, when the craft is moving ahead, to apply to the lower part 9 of the belt a tractive force astern, as illustrated by the arrows in Fig. 1. In the embodiment shown, the two motors 10, 10' are hydraulic motors which are individually drivable at variable speeds, which can be effected by means of valves 11, 11' controlling the flow from pumps 12, 12' which are, in turn, operable by a common internal combustion engine 13 such as a diesel engine. The motors 10, 10' preferably are also reversible such that the driving belts 5, 5' can each be reversed separately from propulsion ahead to propulsion astern. The steering of the craft is carried out by controlling the speeds and/or the propelling directions of each driving belt.

As shown in Fig. 2, the recesses 4, 4' are defined by longitudinal U sections 14, 14', the longitudinal edge portions of the driving belts being positioned inwardly of the flanges of the sections and having a minimum play between the belt and the flanges. In the embodiment shown, the rollers 6, 7 are mounted on axles 15 journaled in bearings 16 which are preferably mounted on the U sections 14. As is also shown in Fig. 2, the projections or transverse ribs 8 of the driving belts extend at least slightly below the lowest portions of the hull bottom. As a result, the belts can be used to propel the craft also on a solid ground or ice surface. In other words, the craft can also be used as an amphibian.

According to the invention, a body 17 is arranged in the space between the upper and lower parts 9, 9' of the individual belt 5 and fills up at least the main portion of this space. The body 17 preferably extends along the entire width of the recess 4 or along the entire width of the driving belt and is, along its longitudinal side edges, attached to the longitudinal side walls of the recess in some suitable manner. In practice, the filling body 17 may consist of a sheet metal shell which can either be empty or be filled, suitably with a light material such as cellular plastic. As appears from Fig. 1, the length of the filling body is as great as the distance between the rollers 6, 7, and its height or thickness is as great as the diameter of the rollers 6, 7. In other words, the filling body according to the embodiment shown is of a substantially parallelepipedal flat form, except for the short ends of the body which are formed with rounded recesses 18, 18' conforming to the circular peripheral shape of the rollers. The rounded end surfaces 18, 18' should, in actual practice, be located extremely close to the circumference of the rollers, for example a few millimeters therefrom. This means that the body 17 substantially fills up the space which is defined between the belt parts 9, 9', the rollers 6, 7 and the longitudinal side walls of each recess 4. Thus, it is ensured that water cannot enter this space and, by turbulence action, interfere with the propulsive force exerted by the lower part 9 of the driving belt while the craft is being driven over water. In the recess 4, only minimal amounts of water can flow into the area between the rear driving roller 7 and the rear portion of the recess 4. The minimal water intake can, besides, be counteracted or eliminated by means of a compressed medium flow, for example a flow of compressed air, which is directed to the upwardly directed flow of water adjacent the rear roller. In this context, it should also be noted that the rear and front ends of the recess 4 have a rounded shape matching the shape of the rollers 6, 7, which means that the gap between the inside of the recess and the outside of the driving projections 8 is extremely small.

The lower side and/or the upper side of the filling body is conveniently coated with a material such as nylon, having a low friction coefficient and a high resistance to wear, whereby at least the lower part of the belt can, while driving, be held in engagement with and supported by the filling body, without being subjected to any considerable frictional resistance.

It should be pointed out that the individual driving belt must not necessarily be accommodated in its entirety in the recess 4. It is thus conceivable to accommodate only part of the belt in the recess, such that the driving projections of the upper part of the belt are accommodated in the recess so as not to exert any propulsive force in the water that would counteract the propulsive force exerted by the projections on the lower part of the belt. The recess can thus be exceedingly shallow and defined by simple means, e.g. ribs or frames mounted on the outside of the hull bottom.

The two driving belts 4, 4' should, in practice, be substantially uniform in respect of size, propulsion efficiency and position relative to a longitudinal central vertical plane through the craft, as is best shown in Fig. 2. Both the recesses 4, 4' and the driving belts 5, 5' are elongate and extend in parallel to each other. For small crafts, the driving belts may have a length of 2-4 m and a width of about 0.5 m. The driving rollers 7 should have such a capacity that they can be rotated at a speed of more than 1000 rpm preferably more than 2000 rpm. Such high speeds are obtainable in that the belts are extremely flexible as compared with, for example, chains.

According to a special embodiment of the invention (see Fig. 3), the driving projections on the outside of the individual driving belt may consist on the one hand of transverse beads or ribs 8' extending between the opposite longitudinal side edges of the belt and, on the other hand, of beads or ridges 8'' making an angle with the transverse beads, e.g. extending at right angles to and between the transverse beads 8', whereby the beads 8', 8'' jointly form a check pattern on the outside of the driving belt. In this embodiment, the longitudinal beads 8'' counteract the tendency of the water to flow out in a direction transversely of the longitudinal direction of the belt, whereby both a better propulsion and an improved steering capacity of the belts are obtained.

According to a special embodiment of the invention, the individual driving belt can be pivotable relative to the hull of the craft. Such an embodiment is schematically illustrated in Fig. 4 which shows how the two driving belts 5, 5' are each mounted in a box-shaped supporting body 19, 19' which is, in turn, movably mounted or suspended in the respective recess in the bottom of the hull 1. In this embodiment, it is conceivable to arrange the two downwardly open boxes or bodies 19, 19' in a common recess in the bottom of the hull. Between the upper and lower parts of the driving belts, there is arranged, as described above, a filling body 17 which is attached to the opposing, downwardly extending longitudinal side walls of the respective box 19, 19'. The two rollers 6, 7 for the driving belt are mounted in the longitudinal side walls of the box 19, the hydraulic motor 20 for rotating the rear roller being mounted, in per se known manner, in the actual roller.

Each of the two boxes 19, 19' is suspended in lifting means in the form of hydraulic cylinders, either in that the boxes themselves are directly connected to the lifting means, or in that end axles 21 projecting from the rollers 6, 7 are connected with the lifting means by universal joints, as shown in Fig. 4. Here, a front cylinder is designated 22, while three rear hydraulic cylinders are designated 23, 24' and 24''. Although only one hydraulic cylinder 22 is shown at the front end of the driving belts, two further hydraulic cylinders corresponding to the outer rear cylinders 24', 24'' can be arranged at the front end, although this is not shown in the drawings. The hydraulic cylinders can be fairly small and mounted in the hull of the craft in some suitable manner.

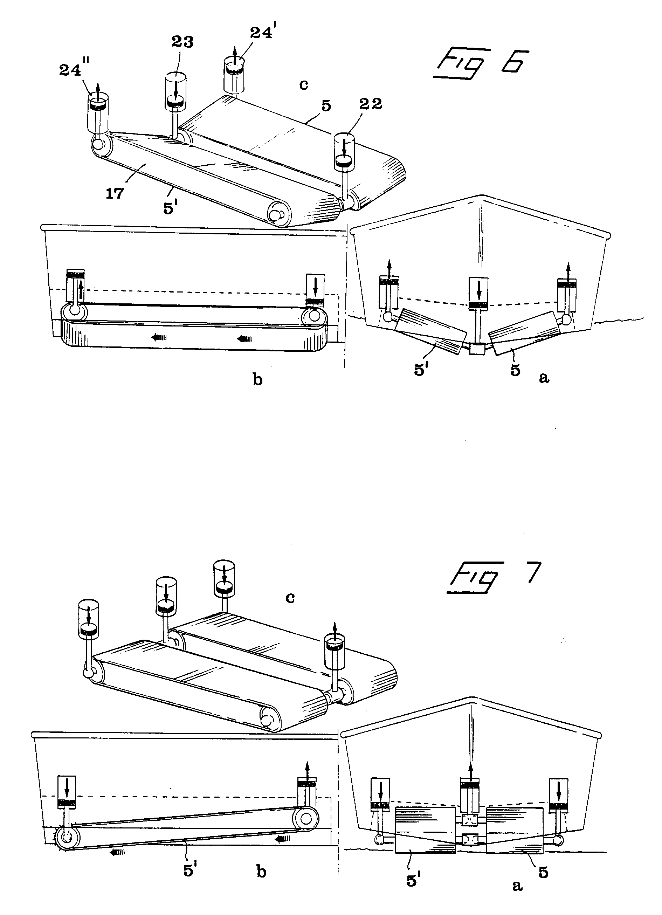

Reference is now made to Figs 6 and 7 which illustrate the function of the hydraulic cylinders. Thus, Fig. 6 shows how the rear outer hydraulic cylinders 24' and 24'' are held in a retracted state in which the outer longitudinal side edges of the driving belts are raised relative to the inner longitudinal side edges which are held down maximally in that the two central hydraulic cylinders 23 and 22 are held in a maximally extended state. In this manner, the two driving belts 5, 5' are positioned, as shown in Fig. 6 a, in a V-shaped configuration causing the moving craft to travel in a half-planing state. In this state, the craft can be propelled at high speed and with maximum steering capacity in that the two inner longitudinal side edges of the driving belts dig into the water. The half-planing state is suitable in rough weather and a choppy sea.

Under good weather conditions with but small waves or no waves at all, the driving belts can be adjusted to the state shown in Fig. 7, in which the two driving belts are substantially oriented in one and the same plane. This is carried out by adjustment of the three rear hydraulic cylinders 23, 24' and 24'', e.g. to a maximally extended position. Since the driving belts are now horizontally set in lateral direction, they will lie extremely high in the water, when the driving rolles 7 are running at maximum speed, and in this manner the craft can be driven at an extremely high speed, although with reduced steering capacity as compared to the half-planing state shown in Fig. 6. In other words, the craft is skimming on the water, as shown in Fig. 7.

By suitable adjustment of the front hydraulic cylinder 22 relative to the rear cylinders, the two driving belts can be set at different angles in longitudinal direction relative to the horizontal plane, as illustrated in Fig. 7 B. By raising the front cylinder, the driving belts can thus be set in a forwardly/upwardly inclined position, if desired. By adjustment of the hydraulic cylinders, the two driving belts can thus be adjusted in relation to the hull of the craft, so that the driving conditions become optimal under different weather conditions.

Fig. 5 shows an embodiment in which the two rollers 6', 7' of the driving belt 5 are of different diameters. More precisely, the rear roller 7' connected to or comprising the source of power in question, is of a larger diameter than the front roller 6'. Since the rear driving roller 7' thus is enlarged, a comparatively high driving speed or peripheral speed of the belt can be obtained, even when the roller runs at moderate speed. This means that motors operating at moderate speeds can be used, and the belt can still be driven at high speed.

## Claims

1. An amphibious craft comprising two separate, endless and flexible driving belts (5, 5') preferably running in parallel and provided with driving projections (8), said driving belts being arranged in known manner between pairs of separate rotating wheels or rollers (6, 7) and being individually drivable by separate sources of power (10, 10') at variable speeds so as to facilitate not only the propulsion of said craft over a body of water, but also and simultaneously the steering thereof, without the assistance of any auxiliary means extending deep into the water, **characterised** in that each separate driving belt (5, 5') is arranged in a downwardly open recess (4, 4') which is formed in the bottom of said craft and is sealed against ambient water, and that in the space between the upper and lower parts (9, 9') of said driving belt, there is arranged a filling body (17) which substantially completely fills up the space defined on one hand by said two rotating rollers (6, 7) and, on the other hand, by the upper and lower parts of the driving belt, the inside of said driving belt being kept permanently in engagement with not only the rollers but also with the upper and lower sides of said filling body, while preventing water from flowing between said driving belt and said filling body.

2. The amphibious craft as claimed in claim 1, **characterised** in that said filling body (17) is of substantially parallelepipedal shape and is of a height or thickness which is as great as the diameter of the rotating rollers (6, 7).

3. The amphibious craft as claimed in claim 1, **characterised** in that the two rotating rollers (6', 7') are of different diameters, and that the roller (7') having the largest diameter is positioned astern and connected to or comprising the source of power.

4. The amphibious craft as claimed in any one of the preceding claims, **characterised** in that the driving projections on the belt consist on the one hand of transverse beads or ribs (8') and, on the other hand, of beads or ribs (8'') which make an angle with the transverse beads, for example extend at right angles to and between the transverse beads, said beads (8', 8'') jointly forming a check pattern on the belt.

5. The amphibious craft as claimed in any one of the preceding claims, **characterised** in that the individual driving belt (5, 5') is pivotable relative to the hull of the craft.

6. The amphibious craft as claimed in claim 5, **characterised** in that said driving belt is pivotable in lateral direction relative to the hull, i.e. about an axis extending in the longitudinal or driving direction of said belt.

7. The amphibious craft as claimed in claim 5 or 6, **characterised** in that said driving belt is pivotable in longitudinal direction relative to the hull, i.e. about a pivot axis extending transversely of the longitudinal direction of the hull.

8. The amphibious craft as claimed in any one of claims 5-7, **characterised** in that said driving belt and the associated rollers are mounted on a supporting body (19) which is, in turn, pivotably mounted in said recess (4) in the hull of the craft.

## Patentansprüche

1. Amphibienfahrzeug mit zwei getrennten, zweckmässigerweise parallel laufenden, endlosen und flexiblen sowie mit Antriebsvorsprüngen (8) versehenen Antriebsbändern (5, 5'), die in bekannter Weise zwischen Paaren von getrennten, rotierbaren Rädern oder Rollen (6, 7) angeordnet und mittels getrennter Antriebsquellen (10, 10') mit veränderbaren Geschwindigkeiten getrennt antreibbar sind, um nicht nur Vorwärtstreiben des Fahrzeugs über dem Wasserkörper, sondern gleichzeitig auch Lenkung desselben ohne Hilfe tief in das Wasser hineintauchender Hilfsmittel zu erleichtern, **dadurch gekennzeichnet,** daß jedes getrennte Antriebsband (5, 5') in einer im Boden des Fahrzeugs ausgeführten, sich nach unten öffnenden und gegenüber umgebendem Wasser dichten Ausnehmung (4, 4') angeordnet ist, und daß ein Ausfüllungskörper (17) im Raum zwischen den oberen und unteren Teilen (9, 9') jedes Antriebbandes vorgesehen ist, welcher den von einerseits den beiden rotierbaren Rollen (6, 7) und andererseits den oberen und unteren Teilen des Antriebbandes abgegrenzten Raum im wesentlichen völlig ausfüllt, wobei die Innenseite des Antriebbandes stets im Eingriff nicht nur mit den Rollen sondern auch mit den oberen und unteren Seiten des Ausfüllungskörpers gehalten wird, wodurch es verhindert wird, daß Wasser zwischen dem Antriebsband und dem Ausfüllungskörper fließt.

2. Amphibienfahrzeug nach Anspruch 1, **dadurch gekennzeichnet,** daß der Ausfüllungskörper (17) eine im wesentlichen parallelepipedische Form und eine Höhe oder Dicke aufweist, welche gleich groß wie der Durchmesser der rotierbaren Rollen (6, 7) ist.

3. Amphibienfahrzeug nach Anspruch 1, **dadurch gekennzeichnet,** daß die beiden rotierbaren Rollen (6', 7') verschiedene Durchmesser aufweisen, und daß die Rolle (7') mit dem größten Durchmesser achteraus gelegen ist und mit der Antriebsquelle verbunden ist oder diese aufweist.

4. Amphibienfahrzeug nach einem der vorherigen Ansprüche, **dadurch gekennzeichnet,** daß die Antriebsvorsprünge auf dem Band aus einerseits quergerichteten Wülsten oder Rippen (8') und andererseits Wülsten oder Rippen (8'') bestehen, welche mit den quergestellten Wülsten einen Winkel bilden, beispielsweise sich im rechten Winkel zu und zwischen den quergerichteten Wülsten erstrecken, wobei die Wülste (8', 8'') zusammen ein Karomuster bilden.

5. Amphibienfahrzeug nach einem der vorherigen Ansprüche, **dadurch gekennzeichnet,** daß das getrennte Antriebsband (5, 5') in bezug auf den Rumpf des Fahrzeugs schwenkbar ist.

6. Amphibienfahrzeug nach Anspruch 5**, dadurch gekennzeichnet,** daß das Antriebsband in bezug auf den Rumpf seitlich , d. h. um eine sich in Längs- oder Fahrtrichtung des Bandes erstreckende Achse, schwenkbar ist.

7. Amphibienfahrzeug nach Anspruch 5 oder 6, **dadurch gekennzeichnet,** daß das Antriebsband in bezug auf den Rumpf in die Längsrichtung , d. h. um eine sich quer zur Längsrichtung des Rumpfes erstreckende Schwenkachse, schwenkbar ist.

8. Amphibienfahrzeug nach einem der Ansprüche 5-7, **dadurch gekennzeichnet,** daß das Antriebsband und die damit verbundenen Rollen auf einem Tragkörper (19) montiert sind, welche seinerseits in der genannten Ausnehmung (4) im Rumpf des Fahrzeugs schwenkbar montiert ist.

## Revendications

1. Engin amphibie, comprenant deux bandes d'entraînement (5,5') souples et sans fin, séparées, s'étendant de préférence en parallèle et munies de saillies d'entraînement (8), lesdites bandes d'entraînement étant agencées de façon connue entre des paires de roues ou rouleaux rotatifs séparés (6,7) et pouvant être entraînées individuellement par des sources séparées de puissance (10,10') à des vitesses variables de façon à faciliter non seulement la propulsion dudit engin sur un plan d'eau, mais également et simultanément la manoeuvre de celui-ci, sans l'assistance d'un moyen auxiliaire quelconque s'étendant profondément dans l'eau,
caractérisé en ce que chaque bande d'entraînement séparée (5,5') est agencée dans un évidement ouvert vers le bas (4,4') qui est formé dans le fond dudit engin et est étanchéifié contre l'eau ambiante, et en ce que, dans l'espace entre les parties supérieure et inférieure (9,9') de ladite bande d'entraînement, il est agencé un corps de remplissage (17) qui remplit sensiblement complètement l'espace défini, d'une part, par lesdits deux rouleaux rotatifs (6,7) et, d'autre part, par les parties supérieure et inférieure de la bande d'entraînement, l'intérieur de ladite bande d'entraînement étant maintenu en permanence en engagement avec non seulement les rouleaux mais également avec les côtés supérieur et inférieur dudit corps de remplissage, en empêchant l'eau de s'écouler entre ladite bande d'entraînement et ledit corps de remplissage.

2. Engin amphibie selon la revendication 1,
caractérisé en ce que ledit corps de remplissage (17) présente une forme sensiblement parallélépipédique et présente une hauteur ou une épaisseur qui est aussi grande que le diamètre des rouleaux rotatifs (6,7).

3. Engin amphibie selon la revendication 1,
caractérisé en ce que les deux rouleaux rotatifs (6',7') sont de diamètres différents, et en ce que le rouleau (7') ayant le plus grand diamètre est positionné à l'arrière et relié à la source de puissance ou comprend celle-ci.

4. Engin amphibie selon l'une quelconque des revendications précédentes,
caractérisé en ce que les saillies d'entraînement sur la bande sont constituées, d'une part, de nervures ou cordons transversaux (8') et, d'autre part, de nervures ou cordons (8'') qui font un angle avec les cordons transversaux, par exemple s'étendent à angle droit par rapport aux cordons transversaux et entre ceux-ci, lesdits cordons (8',8'') formant ensemble un motif de damier sur la bande.

5. Engin amphibie selon l'une quelconque des revendications précédentes,
caractérisé en ce que la bande d'entraînement individuelle (5,5') peut pivoter par rapport à la coque de l'engin.

6. Engin amphibie selon la revendication 5,
caractérisé en ce que ladite bande d'entraînement peut pivoter en direction latérale par rapport à la coque, c'est-à-dire autour d'un axe s'étendant dans la direction longitudinale ou d'entraînement de ladite bande.

7. Engin amphibie selon la revendication 5 ou 6,
caractérisé en ce que ladite bande d'entraînement peut pivoter en direction longitudinale par rapport à la coque, c'est-à-dire autour d'un axe de pivotement s'étendant transversalement à la direction longitudinale de la coque.

8. Engin amphibie selon l'une quelconque des revendications 5 à 7,
caractérisé en ce que ladite bande d'entraînement et les rouleaux associés sont montés sur un corps de support (19) qui est, à son tour, monté de façon pivotante dans ledit évidement (4) dans la coque de l'engin.
